# FASCICULE DE BREVET EUROPEEN

(11) **EP 1 834 171 B1**
(45) Date de publication et mention de la délivrance du brevet: **09.08.2017**
(21) Numéro de dépôt: 05819330.1
(22) Date de dépôt: 24.11.2005
(51) Int. Cl.: G01N 22/04

(54) **SYSTEME DE DETECTION, DE QUANTIFICATION ET/OU DE LOCALISATION D'EAU DANS DES STRUCTURES SANDWICH D'AERONEF ET PROCEDES DE MISE EN OEUVRE DE CE SYSTEME**
SYSTEM ZUM NACHWEIS, ZUR QUANTIFIZIERUNG UND/ODER ZUR LOKALISIERUNG VON WASSER IN FLUGZEUG-SANDWICH-STRUKTUREN SOWIE VERFAHREN ZUR VERWENDUNG DIESES SYSTEMS
SYSTEM FOR DETECTING, QUANTIFYING AND/OR LOCATING WATER IN AIRCRAFT SANDWICH STRUCTURES AND METHODS FOR USING THIS SYSTEM

(30) Priorité: 30.12.2004 FR 0453238
(43) Date de publication de la demande: 19.09.2007
(73) Titulaire: AIRBUS OPERATIONS (S.A.S), 31060 Toulouse (FR)
(72) Inventeur: FERREIRA DOS SANTOS, Fernando Manuel, F-31300 TOULOUSE (FR); MIANE, Jean-Louis, F-33600 PESSAC (FR); ARNAUD, Jean-Louis, F-31400 TOULOUSE (FR)
(74) Mandataire: Gicquel, Olivier Yves Gérard
(86) Numéro de dépôt international: PCT/FR2005/050989
(87) Numéro de publication internationale: WO 2006/072716

(56) Documents cités:
- DE-C1- 19 652 679
- US-A- 4 236 109
- US-A- 5 686 841
- US-A- 5 777 481

## Description

### Domaine de l'invention

L'invention concerne un système et un procédé pour détecter, quantifier et localiser la présence d'eau dans des structures caissonnées d'aéronef et, notamment, dans des structures composites de type sandwich. L'invention trouve des applications dans le domaine de l'aéronautique et, en particulier, dans le domaine de la maintenance avec contrôle non destructif des structures d'aéronefs. L'invention s'applique plus particulièrement aux structures dites caissonnées, c'est-à-dire aux structures fermées, réalisées en matériaux composites de type sandwich avec une enveloppe externe en carbone et une couche interne en nid d'abeille en carton, comme le Nomex® ou en nid d'abeille en fibres de verre.

### Etat de la technique

Dans le domaine de l'aéronautique et, en particulier, de la maintenance des avions en service, il est important de détecter la présence d'eau dans les structures de l'avion. En effet, de l'eau peut être présente dans certaines pièces de l'avion, notamment dans des pièces en matériau composite de type sandwich. Un matériau de type «sandwich » est un matériau comportant une structure alvéolaire de type nid d'abeille recouverte de chaque coté par une peau. Ces peaux peuvent être réalisées en un matériau imperméable. Elles peuvent être façonnées de façon à se rejoindre sur les bords de la pièce formant ainsi une enveloppe autour de la structure alvéolaire. On dit que ces pièces sont caissonnées. Par exemple, les trappes des trains d'atterrissages, les gouvernes de profondeur, les radômes, ou encore les élévateurs sont des pièces qui sont fréquemment réalisées en composite sandwich. Or, la présence d'eau dans ces pièces, notamment dans la zone intermédiaire, affecte la tenue et le poids des structures, ce qui peut entraîner un comportement indésirable de l'avion en vol. Actuellement, la présence d'eau dans ces structures est détectée, soit par des inspections régulières lors de la phase de maintenance, soit par les manifestations de sa présence (gonflement des structures, taches de condensation, etc.), soit, dans des cas extrêmes, par les effets sur des actionneurs mécaniques du fait de l'augmentation du poids de la structure.

Dans certains cas, une pièce peut être endommagée, entraînant le changement complet de la pièce. En particulier, lorsque de l'eau est détectée dans une pièce composite sandwich, il est obligatoire de l'enlever et de réparer les dommages causés par cette eau. Pour cela, il est nécessaire d'immobiliser l'avion pendant un certain temps. En outre, il est également nécessaire d'immobiliser l'avion pour réaliser l'inspection de ces pièces, préalablement à toute réparation, afin de déterminer la présence ou non d'eau. Pour réaliser une inspection de l'avion, il est nécessaire d'immobiliser l'avion pendant une période relativement longue. Or, l'immobilisation d'un avion est coûteuse. De plus, les techniques d'inspection utilisées actuellement sont également coûteuses et souvent difficiles à mettre en oeuvre. En effet, l'inspection des structures d'un avion pour détecter la présence d'eau est réalisée par des techniques de thermographie, ou de radiographie, par exemple. La thermographie nécessite de chauffer l'ensemble de la structure, la radiographie nécessite d'isoler la pièce à inspecter. Ces techniques d'inspection non destructives sont complexes, longues à mettre en oeuvre et nécessitent des précautions particulières d'utilisation.

Un appareil et une méthode pour détecter la présence d'eau dans une structure sandwich, utilisant des micro-ondes, sont connus de US 4,236,109. Un autre appareil et méthode sont décrits dans US 5,686,841.

### Exposé de l'invention

L'invention a justement pour but de remédier aux inconvénients des techniques exposées précédemment. A cette fin, l'invention propose un système et un procédé de détection, quantification et/ou localisation de la présence d'eau dans des structures sandwich au moyen de micro-ondes électromagnétiques générées dans la structure à inspecter. Ce système et ce procédé permettent de détecter facilement la présence d'eau dans la structure, ce qui permet de réaliser les réparations précocement et donc à moindre coût.

De façon plus précise, l'invention concerne un système de détection d'eau dans une structure sandwich pour aéronef, caractérisé en ce qu'il comporte: un générateur de micro-ondes, au moins deux émetteurs/capteurs de micro-ondes montés dans la structure, un détecteur de micro-ondes apte à détecter les micro-ondes après propagation dans la structure et
- une unité de traitement de données associée à une librairie contenant au moins une modélisation de la structure à vide.

Ce système permet donc de détecter la présence d'eau dans une structure sandwich et de quantifier cette eau.

L'invention peut comporter également une ou plusieurs des caractéristiques suivantes :
- chaque émetteur/capteur comporte une embase fixée sur la structure et une tige conductrice située à l'intérieur de la structure.
- le générateur génère des micro-ondes modulées en fréquence autour d'une fréquence centrale choisie en fonction de la structure
- les micro-ondes sont modulées sur un intervalle de fréquence de l'ordre de 1 GHz autour d'une fréquence d'excitation de l'eau qui peut-être fonction de la structure.
- le système comporte au moins trois émetteurs/capteurs répartis dans la structure pour localiser l'eau par triangulation. De cette façon, le système de l'invention permet de déterminer le ou les emplacements où se trouve le point d'eau.
- le générateur génère des impulsions
- les émetteurs/capteurs de micro-ondes sont embarqués dans la structure tandis que le générateur de micro-ondes, le détecteur de micro-ondes, l'unité de traitement de donnés et la librairie sont au sol.
- la structure sandwich comporte deux peaux dans un matériau non perméable aux micro-ondes et une zone intermédiaire dans un matériau peu absorbant de micro-ondes.
- les peaux sont en carbone et la zone intermédiaire en nid d'abeille, Nomex ou fibres de verre ou dans un matériau peu absorbant des micro-ondes comme certaines mousses synthétiques L'invention concerne également un procédé de détection d'eau dans une structure sandwich d'aéronef, caractérisé en ce qu'il comporte :
- une émission de micro-ondes dans la structure sandwich,
- une réception de ces micro-ondes, par des capteurs, après propagation dans la structure,
- un balayage séquentiel à fréquence variable pour déterminer la présence d'eau ainsi qu'un volume de cette eau.

L'invention concerne également un procédé de détection d'eau dans une structure sandwich d'aéronef, caractérisé en ce qu'il comporte :
- une émission de micro-ondes dans la structure sandwich,
- une réception de ces micro-ondes, par des capteurs, après propagation dans la structure,
- une détermination des temps de propagation de ces micro-ondes dans la structure, et
- un traitement de ces temps de propagation pour en déduire une localisation de l'eau.

Dans ce cas, les micro-ondes sont émises à une fréquence fixe.

L'invention concerne aussi un aéronef comportant une structure sandwich et un système tel que décrit précédemment.

### Brève description des dessins

La figure 1 représente schématiquement un exemple de structure équipée du système de détection d'eau de l'invention.
La figure 2 représente une vue en perspective d'une antenne du système de l'invention.
La figure 3 représente une vue en coupe d'une antenne du système de l'invention montée sur une structure sandwich.
La figure 4 représente un exemple de signal généré avec le système de l'invention selon un premier mode de réalisation de l'invention.
La figure 5 représente un exemple du signal détecté en absence et en présence d'eau selon le premier mode de réalisation de l'invention.
La figure 6 représente un exemple de répartition des antennes dans une structure sandwich, selon un second mode de réalisation.
La figure 7 représente un exemple de signaux détectés en présence et en absence d'eau dans le second mode de réalisation de l'invention.

### Description détaillée de modes de réalisation de l'invention

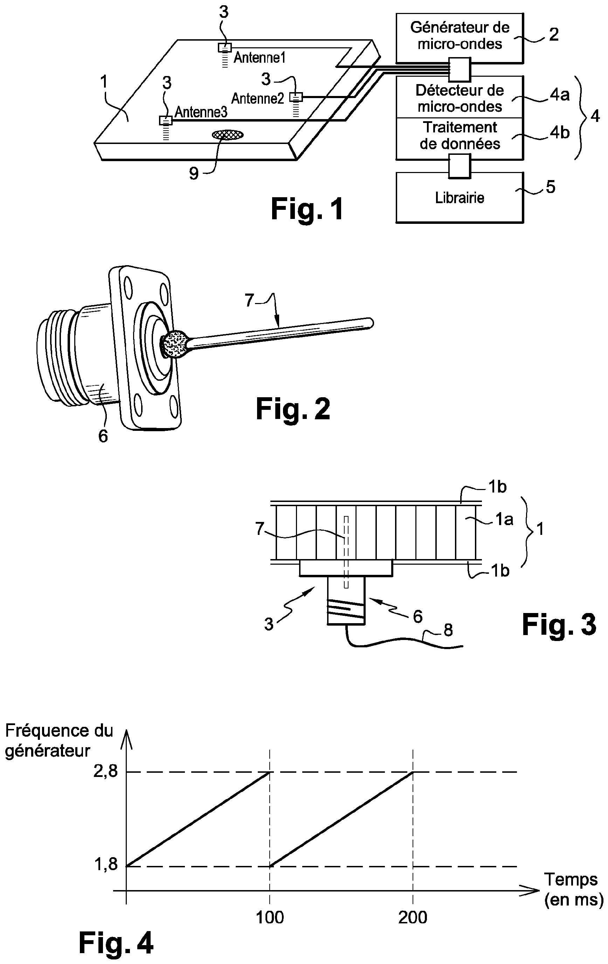

L'invention concerne un système pour détecter la présence d'eau dans des structures sandwich, par injection de micro-ondes dans la structure à travers des antennes intégrées. Un tel système est représenté schématiquement sur la figure 1. Plus précisément, cette figure 1 montre un exemple de structure, ou pièce, équipée du système de l'invention. Dans cet exemple, la pièce 1 à inspecter a une forme rectangulaire. Il est bien entendu qu'elle peut avoir des formes diverses et, en particulier, des formes adaptées à la structure d'un avion. Cette pièce 1 peut être, par exemple, la trappe de train avant d'un avion.

Selon l'invention, le système de la figure 1 comporte un générateur 2 d'ondes électromagnétiques, des émetteurs/capteurs 3, un détecteur d'ondes 4 constitué, par exemple, par une diode Schottky 4a et une unité de traitement de données 4b. Comme on le verra par la suite, cette unité de traitement de données 4b est associée à une librairie 5. Le générateur 2 produit des ondes électromagnétiques transmises à l'intérieur de la pièce 1 par les émetteurs 3. Ces ondes électromagnétiques sont des micro-ondes d'une fréquence de l'ordre de 2,45 GHz (qui est fonction de la forme de la structure) qui peuvent être envoyées par impulsions ou en continue (avec une modulation en fréquence de l'ordre de 1 GHz)

Comme expliqué plus en détail par la suite, ces micro-ondes peuvent être émises sous la forme de signaux continus ou sous la forme d'impulsions.

La pièce 1 est réalisée dans une structure sandwich ayant des peaux en carbone et une zone intermédiaire en nid d'abeille, par exemple en Nomex® ou en fibres de verre Le carbone présente l'avantage d'être infranchissable par des ondes électromagnétiques. Le nid d'abeille a l'avantage de ne pas absorber les ondes électromagnétiques. Ainsi, dans une telle pièce, les ondes sont générées par le générateur 2, et envoyées à l'intérieur de la structure sandwich 1 par les émetteurs 3. Lorsqu'elles sont dans la structure 1, les ondes se propagent entre les deux peaux en carbone.

Selon l'invention, des émetteurs/capteurs 3 sont montés sur la pièce 1. Ils ont pour rôle d'émettre et de capter les micro-ondes se propageant dans la zone intermédiaire de la pièce 1. Un détecteur 4, connecté aux émetteurs/capteurs 3 par des bornes de connexions standard, assure la détection et le traitement des informations fournies par les micro-ondes. C'est le traitement de la propagation de ces micro-ondes qui permet de détecter la présence d'eau dans la pièce 1, de la localiser et de la quantifier.

Dans l'exemple de la figure 1, on a représenté trois capteurs dans la pièce 1. Comme expliqué par la suite, le nombre de capteurs utiles dépend de l'application considérée (détection et quantification ou localisation) et de la forme de la structure à inspecter.

Dans l'exemple de la figure 1, une librairie 5 est associée à l'unité de traitement de données 4b. Cette librairie 5 comporte une modélisation de la pièce 1 à vide, c'est-à-dire une représentation de la pièce 1 lorsque celle-ci ne contient pas d'eau. La modélisation comporte l'emplacement des différents émetteurs/capteurs 3 de la pièce 1. Par exemple, la modélisation mémorisée dans la librairie 5 peut être une cartographie de la pièce à vide ou bien un tableau de modélisation de la pièce à vide. Cette modélisation à vide permet, par comparaison, de déterminer si la pièce contient de l'eau ou non. Plus précisément, le détecteur 4 détermine, à réception des micro-ondes par les capteurs 3, des informations de temps de propagation et de forme des ondes, puis il compare ces informations aux données de la modélisation enregistrée dans la librairie 5. Le détecteur 4 détermine, en fonction de la forme des ondes et, par comparaison avec la modélisation, la quantité d'eau dans la structure et, par conséquent, la présence d'un point d'eau 9 dans la structure. De plus, le détecteur 4 détermine, en fonction du temps de propagation entre l'émetteur/capteur 3 et les différents obstacles ou parois dans la structure, et par comparaison avec la modélisation, la localisation de cette eau dans la structure, c'est-à-dire l'emplacement de cette eau dans la structure.

Comme expliqué précédemment, les capteurs sont fixés dans la structure; ils sont donc embarqués avec la structure. Par contre, le générateur et le détecteur peuvent être des dispositifs extérieurs, c'est-à-dire des dispositifs qui restent au sol et qui sont utilisés uniquement au moment de la maintenance. Ce système étant simple à mettre en oeuvre, une inspection des pièces peut être effectuée régulièrement, au sol, pendant la phase de maintenance de l'avion, ce qui évite une immobilisation trop longue. En outre, ce système permet la détection de faibles quantités d'eau, ce qui permet de réparer la pièce avant qu'elle ne soit trop endommagée. La réparation est donc rapide et peu coûteuse ; l'immobilisation de l'avion est courte.

Dans une variante de l'invention, le générateur et le détecteur sont également embarqués à bord de l'avion.

Un exemple d'un émetteur/capteur 3, appelé aussi antenne, est représenté sur les figures 2 et 3. Plus précisément, la figure 2 montre une vue en perspective d'une antenne non montée. La figure 3 montre une vue en coupe de cette même antenne, lorsqu'elle est montée dans une structure sandwich 1 à inspecter.

Cette antenne 3 comporte une embase 6 fixée sur la structure de la pièce 1 et une tige conductrice 7 dépassant l'embase 6. La tige conductrice 7 est insérée à l'intérieur de la zone intermédiaire en nid d'abeille 1a. La longueur de cette tige 7 est adaptée à la structure à contrôler. Cette longueur peut être de l'ordre de 50 millimètres. L'embase 6 est fixée, par une de ses extrémité, sur une des peaux 1 b de la pièce 1. L'autre extrémité de l'embase 6 est connectée, par exemple par une liaison filaire 8, au générateur 2 et au détecteur 4. Chaque antenne 3 a pour rôle d'émettre et de capter les micro-ondes se propageant dans la zone intermédiaire 1 a de la pièce 1, c'est-à-dire la zone entre les peaux en carbone 1 b.

Comme expliqué précédemment, le système de l'invention permet de détecter la présence d'eau dans une structure sandwich. Il permet également de localiser et/ou de quantifier cette eau.

Selon un premier mode de réalisation de l'invention, l'eau dans la structure peut être quantifiée au moyen d'un balayage qui permet d'uniformiser l'absorption de l'onde dans la structure. Les paramètres de transmission et de réflexion de l'onde permettent de déterminer le volume d'eau dans la structure du fait des pertes diélectriques que l'eau présente aux fréquences de fonctionnement du système (par exemple entre 2 GHz et 3 GHz). Pour mettre en oeuvre ce mode de fonctionnement, le générateur 2 génère des micro-ondes modulées en fréquence sur un intervalle de fréquence de l'ordre de 1 GHz autour d'une fréquence centrale à déterminer en fonction de la structure à contrôler. Cette fréquence centrale peut être la fréquence d'excitation de l'eau, à savoir environ 2,45GHz. Cette fréquence dépend de la forme et des caractéristiques de la structure à tester. Un exemple de signal généré pour ce mode de fonctionnement est représenté sur la figure 4. Plus précisément, la figure 4 montre un exemple d'un signal émis par le générateur 2, en émission continue, avec une fréquence variable. Dans cet exemple, l'onde est générée de façon continue, avec une amplitude de modulation qui varie linéairement entre 1,8 GHz et 2,8 GHz.

Dans ce mode de réalisation, le générateur 2 est connecté à une antenne 3 fixée dans la structure. Une autre antenne 3, fixée elle aussi dans la structure, est connectée au détecteur 4. Ce détecteur 4 est associé à un circuit intégrateur avec un temps de réponse long qui donne une valeur moyenne du signal reçu sur une période de balayage prédéterminée. La tension de sortie du circuit intégrateur est proportionnelle à la quantité d'eau présente dans la structure.

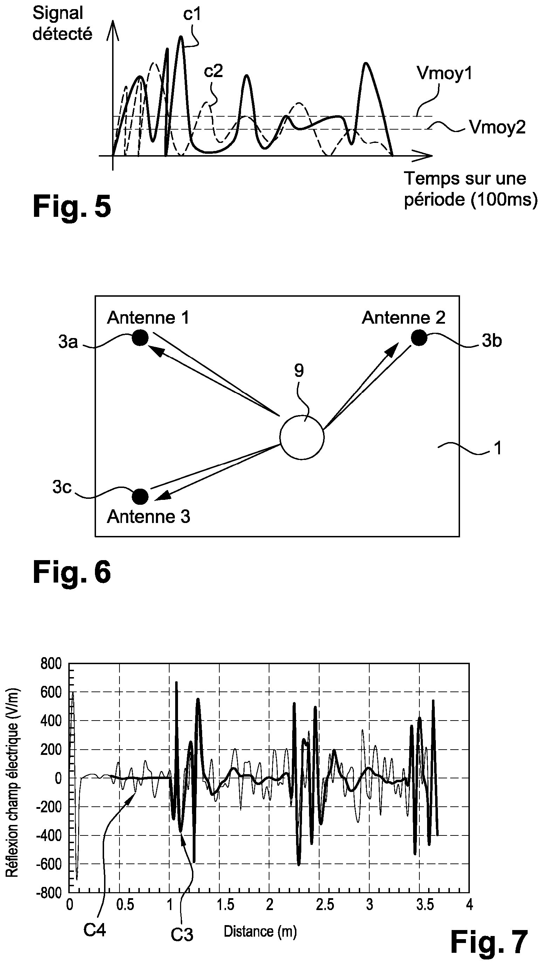

Ce mode de réalisation à variation de fréquence présente l'avantage que le champ électrique qui s'installe dans la structure est uniforme en moyenne. Un capteur 3 mesure, pendant un certain temps, différentes valeurs de tension V dans la structure et la transmet à l'unité de traitement 4b. Grâce à l'homogénéité du champ électrique, l'unité de traitement 4b, après intégration, en fonction du temps, du signal mesuré par le capteur 3, peut calculer la valeur moyenne de la tension Vmoy, caractéristique de l'énergie diffusée dans la structure. Un exemple de la valeur moyenne du signal obtenu, avec et sans eau dans la structure, est représenté sur la figure 5. Plus précisément, la courbe C1 représente la valeur moyenne du signal sans eau et la courbe C2 la valeur moyenne du signal en présence d'eau.

Sans présence d'eau, la valeur moyenne Vmoy1 correspond à la valeur moyenne de la tension du signal mesuré. En présence d'eau dans la structure, la valeur moyenne de la tension baisse jusqu'à la valeur Vmoy2. En effet, l'eau, excitée par les micro-ondes, absorbe une partie de l'énergie émise, diminuant ainsi l'énergie restituée sous forme de tension au niveau du capteur 3. La valeur moyenne de la tension calculée par l'unité de traitement 4b est donc le reflet de la présence ou de l'absence d'eau dans la structure, par comparaison avec un modèle de structure sans eau contenu dans la librairie associée à l'unité de traitement 4b. De plus, la valeur moyenne de la tension Vmoy évolue linéairement en fonction de la quantité d'eau présente dans la structure. Ainsi, la variation de tension entre le modèle et la structure testée permet de déterminer la quantité d'eau présente dans ladite structure.

Dans un second mode de réalisation, l'eau peut être localisée dans la structure au moyen d'impulsions émises par le générateur d'ondes et détectées par triangulation. Autrement dit, dans ce mode de réalisation, le générateur de micro-ondes 2 génère des impulsions micro-ondes qui présentent l'avantage d'éviter la création de modes stationnaires dans la structure sandwich et, par conséquent, de permettre la localisation de l'eau.

Dans ce mode de réalisation, au moins trois émetteurs/capteurs sont placés dans des endroits distincts de la structure. La connaissance des temps de propagation et des formes des ondes dans la structure permet, par triangulation, de localiser précisément la zone contenant de l'eau, par comparaison de ces informations avec les données de la modélisation enregistrée dans la librairie. Un exemple de positionnement des capteurs, pour ce second mode de réalisation, est représenté sur la figure 6. Plus précisément, cette figure 6 montre, selon une vue de dessus, un exemple de répartition de trois capteurs 3a, 3b et 3c dans la structure 1, autour d'un point d'eau 9 . Un tel système permet de calculer les temps de propagation des micro-ondes, dans la structure, et d'en déduire la localisation de l'eau.

La figure 7 représente un exemple de signaux détectés par une antenne, dans ce second mode de réalisation. Plus précisément, la courbe C3 montre un exemple d'impulsions lorsque la structure est vide d'eau et la courbe C4 montre un exemple d'écho après réflexion sur un défaut, c'est-à-dire en présence d'eau (par exemple 5 ml d'eau).

Une fois l'emplacement exact de l'eau déterminé, il est possible d'effectuer la réparation de la zone de structure endommagée, en limitant la zone de réparation au seul emplacement de l'eau.

Le système de l'invention qui vient d'être décrit peut mettre en oeuvre un procédé de détection et de quantification d'eau dans une structure sandwich. Ce procédé consiste en les étapes suivantes :
- émission des micro-ondes dans la pièce 1 au moyen d'un générateur d'impulsions 2 et des émetteurs 3,
- réception des micro-ondes qui se sont propagées à l'intérieur de la pièce 1 au moyen de capteurs 3 connectés à un détecteur 4 ; les capteurs reçoivent des micro-ondes qui ont été émises par les autres émetteurs du système ;
- réalisation d'un balayage séquentiel des micro-ondes à une fréquence variable (impulsion en triangle) dans la pièce 1,
- comparaison avec une modélisation de ladite pièce mémorisée dans la librairie 5 et détermination du volume de ce point d'eau et, par conséquent, de la présence d'eau dans la structure.

Le système de l'invention peut mettre en oeuvre un procédé de détection et de localisation d'eau dans une structure sandwich. Ce procédé comporte les étapes suivantes :
- émission de micro-ondes dans la structure sandwich,
- réception de ces micro-ondes, par des capteurs, après propagation dans la structure ; chaque capteur reçoit les micro-ondes qu'il a lui-même émises et qui ont été réfléchies par l'eau dans la structure ;

- détermination des temps de propagation de ces micro-ondes dans la structure, et
- traitement de ces temps de propagation pour en déduire une localisation de l'eau.

Dans ce procédé de localisation de l'eau dans la structure, les micro-ondes sont émises avec une fréquence fixe.

Les deux procédés qui viennent d'être décrits peuvent être mis en oeuvre par un même système, du type du système décrit précédemment. Ils peuvent être appliqués indépendamment l'un de l'autre ou, au contraire, à la suite l'un de l'autre, lors d'une même inspection de l'avion.

## Revendications

1. - Système de détection d'eau dans une structure sandwich (1) pour aéronef, comportent :
- la structure sandwich (1),
- un générateur (2) de micro-ondes,
- au moins deux émetteurs/capteurs (3) de micro-ondes montés dans la structure, et
- un détecteur (4) de micro-ondes apte à détecter les micro-ondes après propagation dans la structure,
- une unité de traitement de donnés (4b) associée à une librairie (5) contenant au moins une modélisation de la structure (1) à vide.

2. - Système de détection selon la revendication 1, **caractérisé en ce que** chaque émetteur/capteur (3) comporte une embase (6) fixée sur la structure (1) et une tige conductrice (7) située à l'intérieur de la structure.

3. - Système de détection selon l'une quelconque des revendications 1 et 2, **caractérisé en ce que** le générateur génère des micro-ondes modulées en fréquence autour d'une fréquence centrale choisie en fonction de la structure.

4. - Système de détection selon la revendication 3, **caractérisé en ce que** les micro-ondes sont modulées sur un intervalle de fréquence de l'ordre de 1 GHz autour d'une fréquence d'excitation de l'eau.

5. - Système de détection selon l'une quelconque des revendications 1 à 4, **caractérisé en ce qu'**il comporte au moins trois émetteurs/capteurs (3) répartis dans la structure pour localiser l'eau par triangulation.

6. - Système de détection selon la revendication 5, **caractérisé en ce que** le générateur génère des impulsions

7. - Système selon l'une quelconque des revendications 1 à 6, **caractérisé en ce que** :
- les émetteurs/capteurs (3) de micro-ondes sont embarqués dans la structure,
- le générateur (2) de micro-ondes, le détecteur (4) de micro-ondes, l'unité de traitement de donnés et la librairie (5) sont au sol.

8. - Système de détection selon l'une quelconque des revendications 1 à 7, **caractérisé en ce que** la structure sandwich comporte deux peaux dans un matériau non perméable aux micro-ondes et une zone intermédiaire dans un matériau peu absorbant de micro-ondes.

9. - Système de détection selon la revendication 8, **caractérisé en ce que** les peaux sont en carbone et la zone intermédiaire en nid d'abeille, Nomex® ou fibre de verre ou dans un matériau peu absorbant des micro-ondes.

10. - Procédé de détection d'eau dans une structure sandwich d'aéronef, comportent :
- une émission de micro-ondes dans la structure sandwich,
- une réception de ces micro-ondes, par des capteurs, après propagation dans la structure,
- un traitement des signaux détectés après propagation des micro-ondes pour une comparaison avec une modélisation de la structure à vide.

11. - Procédé de détection d'eau selon la revendication 10, **caractérisé en ce que** le traitement comporte un balayage séquentiel à fréquence variable pour déterminer la présence d'eau ainsi qu'un volume de cette eau.

12. - Procédé de détection d'eau selon la revendication 10 ou 11, **caractérisé en ce que** le traitement comporte :
- une détermination des temps de propagation des micro-ondes dans la structure, et
- un traitement de ces temps de propagation pour en déduire une localisation de l'eau.

13. - Procédé selon la revendication 12, **caractérisé en ce que** les micro-ondes sont émises à une fréquence fixe.

14. - Aéronef comportant une structure sandwich, **caractérisé en ce qu'**il comporte un système selon l'une quelconque des revendications 1 à 9.

## Patentansprüche

1. System zur Erfassung von Wasser in einer Sandwichstruktur (1) für ein Luftfahrzeug, aufweisen:
- die Sandwichstruktur (1),
- einen Mikrowellengenerator (2),
- mindestens zwei in die Struktur eingebaute Mikrowellen-Sender/Sensoren (3) und
- einen Mikrowellendetektor (4), der die Mikrowellen nach Ausbreitung in der Struktur erfassen kann,
- eine Datenverarbeitungseinheit (4b), die einer Programmbibliothek (5) zugeordnet ist, die mindestens ein Modell der leeren Struktur (1) enthält.

2. Erfassungssystem nach Anspruch 1, **dadurch gekennzeichnet, dass** jeder Sender/Sensor (3) eine an der Struktur (1) befestigte Grundplatte (6) und eine leitende Stange (7) aufweist, die sich im Inneren der Struktur befindet.

3. Erfassungssystem nach einem der Ansprüche 1 und 2, **dadurch gekennzeichnet, dass** der Generator um eine abhängig von der Struktur gewählte zentrale Frequenz herum frequenzmodulierte Mikrowellen erzeugt.

4. Erfassungssystem nach Anspruch 3, **dadurch gekennzeichnet, dass** die Mikrowellen über ein Frequenzintervall in der Größenordnung von 1 GHz um eine Anregungsfrequenz des Wassers herum moduliert werden.

5. Erfassungssystem nach einem der Ansprüche 1 bis 4, **dadurch gekennzeichnet, dass** es mindestens drei Sender/Sensoren (3) aufweist, die in der Struktur verteilt sind, um das Wasser durch Triangulation zu lokalisieren.

6. Erfassungssystem nach Anspruch 5, **dadurch gekennzeichnet, dass** der Generator Impulse erzeugt.

7. System nach einem der Ansprüche 1 bis 6, **dadurch gekennzeichnet, dass**:
- die Mikrowellen-Sender/Sensoren (3) in der Struktur angebracht sind,
- der Mikrowellengenerator (2), der Mikrowellendetektor (4), die Datenverarbeitungseinheit und die Programmbibliothek (5) am Boden sind.

8. Erfassungssystem nach einem der Ansprüche 1 bis 7, **dadurch gekennzeichnet, dass** die Sandwichstruktur zwei Häute aus einem für die Mikrowellen nicht durchlässigen Material und eine Zwischenzone aus einem Mikrowellen wenig absorbierenden Material aufweist.

9. Erfassungssystem nach Anspruch 8, **dadurch gekennzeichnet, dass** die Häute aus Kohlenstoff sind und die Zwischenzone wabenförmig, aus Nomex® oder Glasfaser oder aus einem Mikrowellen wenig absorbierenden Material ist.

10. Verfahren zur Erfassung von Wasser in einer Sandwichstruktur eines Luftfahrzeugs, aufweisen
- ein Aussenden von Mikrowellen in der Sandwichstruktur,
- ein Empfang dieser Mikrowellen durch Sensoren nach Ausbreitung in der Struktur,
- eine Verarbeitung der erfassten Signale nach Ausbreitung der Mikrowellen für einen Vergleich mit einem Modell der leeren Struktur.

11. Verfahren zur Erfassung von Wasser nach Anspruch 10, **dadurch gekennzeichnet, dass** die Verarbeitung eine sequentielle Abtastung mit variabler Frequenz aufweist, um das Vorhandensein von Wasser sowie ein Volumen dieses Wassers zu bestimmen.

12. Verfahren zur Erfassung von Wasser nach Anspruch 10 oder 11, **dadurch gekennzeichnet, dass** die Verarbeitung aufweist:
- eine Bestimmung der Ausbreitungszeiten der Mikrowellen in der Struktur, und
- eine Verarbeitung dieser Ausbreitungszeiten, um daraus eine Lokalisierung des Wassers abzuleiten.

13. Verfahren nach Anspruch 12, **dadurch gekennzeichnet, dass** die Mikrowellen mit Festfrequenz gesendet werden.

14. Luftfahrzeug, das eine Sandwichstruktur aufweist, **dadurch gekennzeichnet, dass** es ein System nach einem der Ansprüche 1 bis 9 aufweist.

## Claims

1. System for detecting water in a sandwich structure (1) for aircraft, comprise:
- the sandwich structure (1),
- a microwave generator (2),
- at least two microwave emitters/sensors (3) mounted in the structure, and
- a microwave detector (4) capable of detecting the microwaves after propagation in the structure,
- a data processing unit (4b) associated with a library (5) containing at least one modelling of the structure (1) when empty.

2. Detection system according to Claim 1, **characterized in that** each emitter/sensor (3) comprises a base (6) fixed to the structure (1) and a conducting rod (7) situated inside the structure.

3. Detection system according to either one of Claims 1 and 2, **characterized in that** the generator generates microwaves frequency-modulated about a central frequency selected according to the structure.

4. Detection system according to Claim 3, **characterized in that** the microwaves are modulated over a frequency interval of the order of 1 GHz about a water excitation frequency.

5. Detection system according to any one of Claims 1 to 4, **characterized in that** it comprises at least three emitters/sensors (3) distributed in the structure to locate the water by triangulation.

6. Detection system according to Claim 5, **characterized in that** the generator generates pulses.

7. System according to any one of Claims 1 to 6, **characterized in that**:
- the microwave emitters/sensors (3) are embedded in the structure,
- the microwave generator (2), the microwave detector (4), the data processing unit and the library (5) are on the ground.

8. Detection system according to any one of Claims 1 to 7, **characterized in that** the sandwich structure comprises two skins in a material that is not permeable to the microwaves and an intermediate zone in a material not very absorbent to microwaves.

9. Detection system according to Claim 8, **characterized in that** the skins are made of carbon and the intermediate zone of honeycomb, Nomex® or glass fibre or of a material not very absorbent to the microwaves.

10. Method for detecting water in an aircraft sandwich structure, comprise:
- an emission of microwaves in the sandwich structure,
- a reception of these microwaves, by sensors, after propagation in the structure,
- a processing of the signals detected after propagation of the microwaves for a comparison with a modelling of the structure when empty.

11. Method for detecting water according to Claim 10, **characterized in that** the processing comprises a sequential scanning at variable frequency to determine the presence of water and a volume of this water.

12. Method for detecting water according to Claim 10 or 11, **characterized in that** the processing comprises:
- a determination of the propagation times of the microwaves in the structure, and
- a processing of these propagation times to deduce a location of the water therefrom.

13. Method according to Claim 12, **characterized in that** the microwaves are emitted at a fixed frequency.

14. Aircraft comprising a sandwich structure, **characterized in that** it comprises a system according to any one of Claims 1 to 9.
